# EUROPÄISCHE PATENTSCHRIFT

(11) **EP 1 915 876 B1**
(45) Veröffentlichungstag und Bekanntmachung des Hinweises auf die Patenterteilung: **03.10.2012**
(21) Anmeldenummer: 06762987.3
(22) Anmeldetag: 04.08.2006
(51) Int. Cl.: H04Q 1/14

(54) **MONTAGEVORRICHTUNG FÜR LEITUNGS- UND STECKVERBINDUNGSELEMENTE**
ASSEMBLY DEVICE FOR LINE AND PLUG CONNECTOR ELEMENTS
DISPOSITIF DE MONTAGE POUR ELEMENTS DE CONNEXION DE LIGNES ET DE RACCORDEMENT PAR FICHES

(30) Priorität: 16.08.2005 DE 102005038540
(43) Veröffentlichungstag der Anmeldung: 30.04.2008
(73) Patentinhaber: ADC GmbH, 14167 Berlin (DE)
(72) Erfinder: HETZER, Ulrich, 15831 Mahlow (DE); MÖSSNER, Frank, 12277 Berlin (DE); NAD, Ferenc, 14197 Berlin (DE)
(74) Vertreter: Zucker, Volker
(86) Internationale Anmeldenummer: PCT/EP2006/007729
(87) Internationale Veröffentlichungsnummer: WO 2007/019973

(56) Entgegenhaltungen:
- EP-A- 0 743 706
- EP-A2- 0 795 935
- EP-A2- 1 280 363
- DE-B3- 10 313 358
- FR-A1- 2 758 660
- GB-A- 2 408 392

## Beschreibung

Die Erfindung betrifft eine Montagevorrichtung für elektrische Leitungs- und Steckverbindungselemente der Telekommunikations- und Datentechnik (Patch-Panel) nach dem Oberbegriff des Anspruchs 1.

Aus der Telekommunikations- und Datentechnik sind Montagevorrichtungen für Leitungs - und Steckverbindungselemente, so genannte "Patch-Panels" bekannt, mit deren Hilfe beispielsweise ein Anschlussfeld für Datenleitungen geschaffen wird. So sind insbesondere Patch-Panels bekannt, die üblicherweise eine Tragstruktur aus Metall sowie eine oder mehrere auf der Tragstruktur aufrastbare Blenden aus Kunststoff aufweisen, in denen Aufnahmen für elektrische Anschlussbuchsen vorgesehen sind, wobei mittels seitlicher Tragelemente die Möglichkeit zur Befestigung der Montagevorrichtung an einem üblicherweise ein Staridardmaß von 19 Zoll aufweisenden Schaltschrank bzw. Rack geschaffen wird. Es sind geschirmte und ungeschirmte Steckverbinder im Einsatz. Insbesondere bei ungeschirmte Systeme für höhere Übertragungsraten ab 10 Gbit treten undefinierbare Übersprechen (ANEXT = Alien Near End Cross Talk bzw. "fremdes Nebensprechen auf der nahen Seite) zwischen den Steckverbindern auf. Der Erfindung liegt daher das technische Problem zugrunde, eine Montagevorrichtung für elektrische Leitungs- und Steckverbindungselemente mit verbesserten elektrischen Übertragungseigenschaften zu schaffen, mittels derer insbesondere die Anforderungen von 10 Gigabit/s-Ethemet eingehalten werden können.

Dokument DE-13-10313358 offenbart eine Montage Vorrichtung nach dem Oberbegrift des Anspruchs 1.

Die Lösung des technischen Problems ergibt sich erfindungsgemäß durch den Gegenstand des Anspruchs 1. Weitere vorteilhafte Ausgestaltungen der Erfindung ergeben sich aus den Unteransprüchen.

Der Erfindung liegt dabei die Erkenntnis zugrunde, dass es aufgrund der Metalltragstruktur zu galvanischen und induktiven Kopplungen kommen kann, die das ANNEXT erhöhen und zwar hinsichtlich der Steckerbindungen als auch der auf Metallteilen aufliegenden ungeschirmten Kabel. Dieser Effekt ist selbst bei geschirmten Anwendungen spürbar. Die Aufgabe wird also - entgegen der herkömmlichen Annahme, dass die metallische Abschirmung der Montagevorrichtung der Signalqualität zuträglich ist - erfindungsgemäß gelöst, indem bei der Montagevorrichtung auf metallische Bestandteile gänzlich verzichtet wird. Dazu wird eine Montagevorrichtung für elektrische Leitungs- und Steckverbindungselemente der Telekommunikations- und Datentechnik vorgeschlagen, umfassend mindestens ein Frontpanel, welches eine Tragstruktur mit seitlichen Tragelementen sowie mindestens eine Blende mit einer Mehrzahl von Aufnahmen für Anschlussbuchsen aufweist, wobei das Frontpanel vollständig aus Kunststoff ausgebildet ist. Unter "Kunststoff" ist dabei ausschließlich ein elektrisch isolierendes Material zu verstehen. Dabei wird die Erkenntnis ausgenutzt, dass bei zunehmenden Übertragungsgeschwindigkeiten neben den bekannten Übersprecheffekten innerhalb einer Anschlussbuchse wie NEXT (Near End Cross Talk bzw. "Nebensprechen auf der nahen Seite") und FEXT (Far End Cross Talk bzw. "Nebensprechen auf der fernen Seite") ein erhöhter Einfluss des so genannten ANEXT (Alien Near End Cross Talk bzw. "fremdes Nebensprechen auf der nahen Seite") bei benachbarten Buchsen besteht. Je höher die Signalübertragungsrate ist, desto größer wird der Einfluss von ANEXT, dem konstruktiv begegnet werden muss. Somit kann durch Wegnahme der Metalltragstruktur des Panels eine Verringerung der gegenseitigen kapazitiven und galvanischen Signaleinkopplung in benachbarte Anschlussbuchsen erzielt werden. Dies bietet insbesondere bei neuartigen Anwendungen im 10 Gigabit/s-Bereich merkliche Vorteile, da hier das ANEXT besonders negativ zum Tragen kommt.

Der Abstand benachbarter Aufnahmen für Anschlussbuchsen ist jeweils mindestens so groß wie die Breite einer einzelnen Aufnahme. Durch ein Vergrößern der Abstände zwischen benachbarten Anschlussbuchsen im Vergleich zu den bei herkömmlichen Patch-Panels verwendeten Abständen wird das auf ANEXT beruhende Übersprechen zwischen benachbarten Anschlussbuchsen weiter reduziert und somit die Signalqualität verbessert, da hierdurch der Abstand der Störquelle zur Senke vergrößert wird. Dabei ist davon auszugehen, dass sämtliche an der Montagevorrichtung vorgesehenen Aufnahmen für Anschlussbuchsen die gleiche Breite aufweisen, beispielsweise um Anschlussbuchsen, welche Bestandteil von Steckverbindungen nach dem RJ-Standard sind, aufnehmen zu können. Vorzugsweise beträgt der Abstand benachbarter Aufnahmen dabei z. B. mindestens das 1,4-fache der Breite einer einzelnen Aufnahme. Unter dem "Abstand benachbarter Aufnahmen" ist dabei insbesondere der seitliche Abstand zu verstehen. Sind in einer Montagevorrichtung mehrere übereinander liegende Reihen von Aufnahmen für Anschlussbuchsen vorgesehen, so ist das Übersprechen der übereinander liegenden Anschlussbuchsen verschiedener Reihen weniger kritisch, so dass dort die standardmäßigen Abstände in der Regel ausreichend sind. Für den Fall mehrerer übereinander liegender Reihen von Aufnahmen für Anschlussbuchsen beträgt vorzugsweise der seitliche Abstand zwischen benachbarten Anschlussbuchsen mindestens das Doppelte und weiter vorzugsweise mindestens das 2,5fache des vertikalen Abstandes zweier übereinander liegender Reihen von Aufnahmen. Die Aufnahmen für Anschlussbuchsen sind in äquidistantem Abstand angeordnet, so dass für Steckverbindungen nach dem RJ-Standard bei den üblichen 19-Zoll-Racks unter Einhaltung der erfindungsgemäßen Abstände vorzugsweise 24 Aufnahmen in zwei übereinander liegenden Reihen, d.h. vorzugsweise 12 nebeneinander liegende Aufnahmen pro Reihe, im Frontpanel angeordnet werden können.

Die Montagevorrichtung (weist) mindestens ein Kabelabfangelement aus Kunststoff zum Abstützen und/oder Befestigen von mindestens einem Kabel auf, wobei das Kabelabfangelement rückseitig am Frontpanel angebracht ist. Die mit Kabeln vorbeschalteten Anschlussbuchsen können dadurch zunächst im Frontpanel aufgenommen werden, wobei die Kabel dann in einfacher und übersichtlicher Weise einzeln in definierter Lage nach hinten aus dem Frontpanel herausgeführt werden können, indem sie auf dem Kabelabfangelement aufliegen. Es ist dabei auch denkbar, dass jedes einzelne Kabel beispielsweise mittels eines Kabelbinders, welcher dann auch als Zugentlastung dient, am Kabelabfangelement fixiert wird. Auch hierbei dient die Ausfertigung des Kabelabfangelements als Kunststoffteil der Verringerung von kapazitiv-galvanischen Kopplungen und dadurch ausgelöstem unerwünschten Übersprechen.

In einer vorteilhaften Ausführungsform ist das Kabelabfangelement mittels mindestens einer Schnappverbindung am Frontpanel einrastend befestigt. Auf diese Weise ist eine einfache, schnelle und stabile Montage der vorbeschalteten Anschlussbuchsen möglich.

In einer weiteren vorteilhaften Ausführungsform greifen zum Anbringen des Kabelabfangelements am Frontpanel diese bereichsweise ineinander, wobei im Bereich des gegenseitigen Eingriffs mindestens ein Scharnier vorgesehen ist, mit dessen Hilfe das Kabelabfangelement gegenüber dem Frontpanel verschwenkbar ist. Somit können zunächst die Anschlussbuchsen beschaltet und danach im Frontpanel eingesetzt werden, bevor dann das Kabelabfangelement mittels des Scharniers von unten in das Frontpanel eingehängt, hochgeklappt, eingerastet und somit insgesamt montiert werden kann. Dies entspricht einem besonders einfachen, sauberen, schnellen und stabilen Montagevorgang.

Am Kabelabfangelement mindestens ist eine Kabelhalterung aus Kunststoff zum definierten Positionieren einer Mehrzahl von Kabeln vorgesehen. Neben dem dadurch erzielten Vorteil einer erhöhten Übersichtlichkeit der montierten Kabel dient die Kabelhalterung aus Kunststoff auch dem Verhindern von elektrischen Kontakten zwischen den Schirmungen der einzelnen Kabel. Die Ausführung als Kunststoffteil dient somit auch hier der Verringerung von kapazitiv-galvanischen Kopplungen zwischen den Leitungen und dadurch ausgelöstem unerwünschten Übersprechen.

In einer weiteren vorteilhaften Ausführungsform sind Kabelabfangelement und Kabelhalterung einstückig ausgebildet. Neben dem Vorteil einer erhöhten Stabilität ist die einstückige Ausfertigung in der Regel auch vergleichsweise preisgünstig in der Lagerhaltung und in der Herstellung.

In einer alternativen Ausführungsform sind Kabelabfangelement und Kabelhalterung mehrteilig ausgebildet. Dies erlaubt, dass beispielsweise für unterschiedliche Kabeldicken bedarfsweise unterschiedliche Kabelhalterungen verwendet und diese in einfacher Weise ausgetauscht werden können. Vorzugsweise werden über die gesamte Breite des Kabelabfangelements mehrere, beispielsweise vier, Kabelhalterungen verwendet. Somit können zum einen innerhalb einer einzigen Montagevorrichtung verschiedene Kabelhalterungen bedarfsweise für unterschiedliche Kabeldicken eingesetzt werden und zum anderen Fertigungsaufwand und -kosten gering gehalten werden, da sich kleinere bzw. schmalere Kabelhalterungen einfacher und preisgünstiger fertigen lassen, als entsprechende größere Einheiten.

An der Kabelhalterung ist eine Mehrzahl von nebeneinander angeordneten, nach einer Seite geöffneten bogenförmigen Halteelementen vorgesehen, die zum definierten Positionieren und/oder Befestigen von jeweils mindestens einem Kabel an der Kabelhalterung federelastisch ausgebildet sind. Die Halteelemente sind dabei als Bestandteile der Kabelhalterung ebenfalls aus Kunststoff ausgebildet. Die bogenförmige Ausführung erleichtert dabei das Einführen der Kabel in die Zwischenräume zwischen den Halteelementen in der Kabelhalterung und führt automatisch zu einem korrekten Positionieren der Kabel in ausreichendem Abstand. Durch die federelastische Ausbildung der bogenförmigen Elemente und deren Öffnung nach einer Seite hin werden die montierten Kabel sowohl form- als auch kraftschlüssig in ihrer Lage an der jeweiligen Kabelhalterung gehalten.

Die Erfindung wird nachfolgend anhand eines bevorzugten Ausführungsbeispiels näher erläutert. In den zugehörigen Zeichnungen zeigen
- Fig. 1: eine perspektivische Ansicht einer erfindungsgemäßen Montagevorrichtung für Leitungs- und Steckverbindungselemente frontal von schräg oben gesehen,
- Fig. 2: eine perspektivische Ansicht einer Variante der gleichen Ausführungsform einer erfindungsgemäßen Montagevorrichtung für Leitungs- und Steckverbindungselemente frontal von schräg oben gesehen,
- Fig.3: eine perspektivische Ansicht eines Frontpanels einer erfindungsgemäßen Montagevorrichtung frontal von schräg oben gesehen,
- Fig. 4: eine perspektivische Detailansicht eines seitlichen Abschnitts der Rückseite eines Frontpanels einer erfindungsgemäßen Montagevorrichtung von schräg unten gesehen,
- Fig. 5: eine perspektivische Ansicht eines Kabelabfangelements einer erfindungsgemäßen Montagevorrichtung von schräg oben gesehen,
- Fig. 6: eine perspektivische Detailansicht des Einrastvorgangs zwischen einem Frontpanel und einem Kabelabfangelement einer erfindungsgemäßen Montagevorrichtung von schräg unten gesehen,
- Fig. 7: eine perspektivische Ansicht einer Kabelhalterung einer erfindungsgemäßen Montagevorrichtung frontal von schräg oben gesehen,
- Fig. 8: eine Vorderansicht einer Kabelhalterung einer erfindungsgemäßen Montagevorrichtung,
- Fig. 9: eine perspektivische Ansicht einer Kabelhalterung einer erfindungsgemäßen Montagevorrichtung frontal von schräg unten gesehen,
- Fig. 10: eine perspektivische Detailansicht einer in einem Kabelabfangelement eingerasteten Kabelhalterung einer erfindungsgemäßen Montagevorrichtung von schräg unten gesehen.

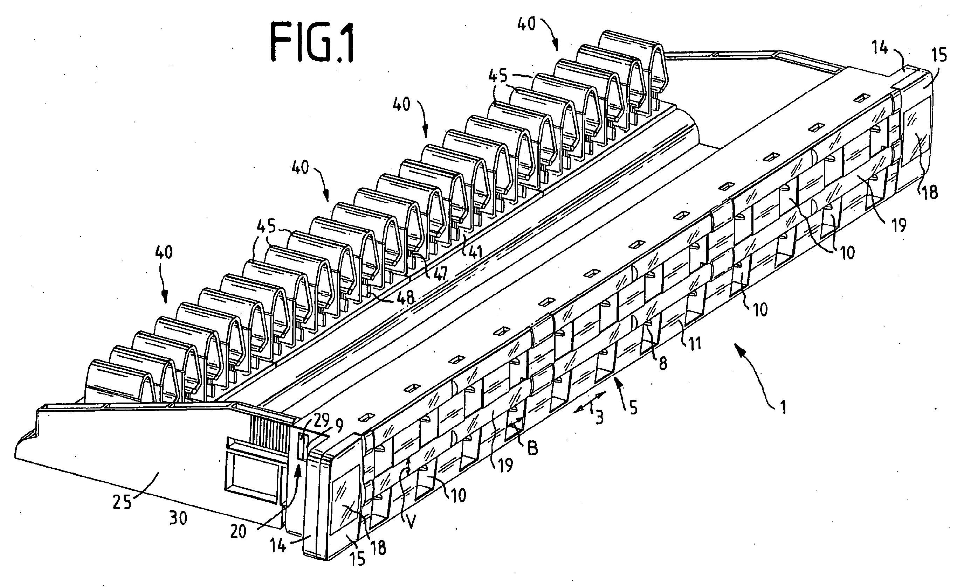

Fig. 1 zeigt frontal von schräg oben gesehen eine perspektivische Ansicht einer erfindungsgemäßen Montagevorrichtung für Leitungs- und Steckverbindungselemente der Telekommunikations- und Datentechnik, einem so genannten Patch-Panel 1, mit dessen Hilfe beispielsweise ein Anschlussfeld für Datenleitungen geschaffen werden kann. Das Patch-Panel 1 umfassf dabei ein Frontpanel 5, welches eine Tragstruktur 12 mit seitlichen Tragelementen 14 sowie eine einstückig mit dem Frontpanel 5 ausgebildete Blende 11 mit einer Mehrzahl von Aufnahmen 10 für Anschlussbuchsen (nicht dargestellt) aufweist, wobei das Frontpanel 5 vollständig aus Kunststoff ausgebildet ist. Durch Wegnahme sämtlicher Metallteile kann somit eine Verringerung der gegenseitigen kapazitiven und galvanischen Signaleinkopplung in benachbarten Anschlussbuchsen erzielt werden, um insbesondere das Übersprechen durch "Alien Near End Cross Talk" (ANEXT) möglichst weitgehend zu verhindern. Die Aufnahmen 10 für Anschlussbuchsen sind in dem Frontpanel 5 in zwei übereinander liegenden Reihen angeordneten. Der seitliche Abstand 3 benachbarter Aufnahmen 10 für Anschlussbuchsen ist dabei jeweils mindestens so groß wie die Breite B einer einzelnen Aufnahme 10. Vorzugsweise beträgt der Abstand benachbarter Aufnahmen 10 dabei z. B. mindestens das 1,4-fache der Breite einer einzelnen Aufnahme 10. Der seitliche Abstand zwischen benachbarten Aufnahmen 10 für Anschlussbuchsen beträgt zudem vorzugsweise mindestens das Doppelte und weiter vorzugsweise mindestens das 2,5-fache des vertikalen Abstandes V der zwei übereinander liegenden Reihen von Aufnahmen 10. Sämtliche an dem Frontpanel 5 vorgesehenen Aufnahmen 10 für Anschlussbuchsen weisen dabei die gleiche Breite B auf, beispielsweise um Anschlussbuchsen, welche Bestandteil von Steckverbindungen nach dem RJ-Standard sind, insbesondere RJ45-Buchsen, aufnehmen zu können. Zu diesem Zweck ist auf der Innenseite jeder Aufnahme 10 jeweils links und rechts eine Verankerungsnut 8 für einzubringende Anschlussbuchsen vorgesehen. Die Aufnahmen 10 für Anschlussbuchsen sind in äquidistantem Abstand angeordnet, so dass für Steckverbindungen nach dem RJ-Standard bei den üblichen 19-Zoll-Racks unter Einhaltung der erfindungsgemäßen Abstände vierundzwanzig Aufnahmen in zwei übereinander liegenden Reihen, d.h. zwölf nebeneinander liegende Aufnahmen pro Reihe, im Frontpanel 5 angeordnet sind. Mittels der am linken und rechten Ende des Frontpanels 5 vorgesehenen seitlichen Tragelemente 14 wird die Möglichkeit zur Befestigung des Patch-Panels 1 an einem üblicherweise ein Standardmaß von 19 Zoll aufweisenden Schaltschrank bzw. Rack geschaffen. An den seitlichen Tragelementen 14 ist jeweils ein aufrastbares seitliches Abdeckelement 15 vorgesehen. Dieses weist an seiner Vorderseite jeweils eine quadratische Mulde auf, in der jeweils ein Beschriftungsfeld angeordnet ist, welches mit einer beispielsweise aus Polyacryl ausgebildeten transparenten Labelabdeckung 18 abgedeckt ist. Die Blende 11 ist in Längsrichtung in drei gleich breite und gleich hohe Abschnitte aufgeteilt. Dabei ist in jedem der Abschnitte über den beiden übereinander angeordneten Reihen von Aufnahmen 10 für Anschlussbuchsen jeweils ein längliches Beschriftungsfeld angeordnet, welches jeweils mit einer transparenten elastischen Labelabdeckung 19 abgedeckt ist. Jedes der mit der elastischen Labelabdeckung 19 abgedeckten Beschriftungsfelder erstreckt sich dabei in seiner Längsrichtung über die Breite von vier Aufnahmen 10 für Anschlussbuchsen sowie drei dazwischen liegenden Abständen 3. Zwar sind Frontpanel 5 und Blende 11 vorzugsweise einstückig ausgebildet, es ist jedoch auch vorstellbar, dass sie als getrennte Bauteile und mehrteilig ausgebildet sind. So kann die Blende 11 beispielsweise auch - entsprechend ihrer Aufteilung in drei Abschnitte - als drei separate, in das Frontpanel 5 einrastbare Aufsteckteile ausgebildet sein, die beispielsweise jeweils zwei Reihen mit jeweils vier Aufnahmen 10 sowie jeweils zwei Beschriftungsfelder mit je einer transparenten elastischen Labelabdeckung 19 umfassen.

An der Rückseite des Frontpanels 5 ist ein Kabelabfangelement- 25 aus Kunststoff zum Abstützen und/oder Befestigen von einem oder mehreren Kabeln (nicht dargestellt) angebracht. Das Kabelabfangelement 25 weist dabei im Wesentlichen eine U-Form auf und ist mit den Enden der seitlichen Schenkel des stilisierten U's mittels jeweils einer Schnappverbindung 20 am Frontpanel 5 einrastend befestigt. Die Schnappverbindung 20 wird dabei durch das Eingreifen eines Raststegs 29, welcher Bestandteil eines Schnappverbindungssteckelements 30 ist, in einen Rastschlitz 9 hergestellt. Zum erleichterten Lösen der Schnappverbindung 20 ist an einem elastisch ausgebildeten Abschnitt des Schnappverbindungssteckelements 30 eine Riffelung 27 angebracht.

Am Kabelabfangelement 25 sind insgesamt vier vorzugsweise identisch ausgebildete Kabelhalterungen 40 aus Kunststoff zum definierten Positionieren einer Mehrzahl von Kabeln (nicht dargestellt) vorgesehen, wobei das Kabelabfangelement 25 und die Kabelhalterungen 40 getrennt ausgebildet sind und sich die vier Kabelhalterungen 40 über nahezu die gesamte Breite des Kabelabfangelements 25 erstrecken. Die Kabelhalterungen 40 weisen jeweils einen Sockel 41 auf, auf dem jeweils eine Mehrzahl, vorzugsweise sechs, von nebeneinander angeordneten, nach einer Seite geöffneten bogenförmigen Halteelementen 45 vorgesehen ist, die zum definierten Positionieren und/oder Befestigen von jeweils mindestens einem Kabel an den Kabelhalterungen 40 federelastisch ausgebildet sind. Die Halteelemente 45 sind dabei als Bestandteile der jeweiligen Kabelhalterung 40 ebenfalls aus Kunststoff ausgebildet. Die bogenförmige Ausführung erleichtert dabei das Einführen der Kabel in die Zwischenräume zwischen den Halteelementen 45 in der Kabelhalterung 40 und führt automatisch zu einem korrekten Positionieren der Kabel in ausreichendem Abstand. Durch die federelastische Ausbildung der bogenförmigen Haltelemente 45 und deren Öffnung nach einer Seite hin werden die montierten Kabel sowohl form- als auch kraftschlüssig in ihrer Lage an der jeweiligen Kabelhalterung 40 gehalten. Neben dem dadurch erzielten Vorteil einer erhöhten Übersichtlichkeit der montierten Kabel dienen die Kabelhalterungen 40 aus Kunststoff auch dem Verhindern von elektrischen Kontakten zwischen den Schirmungen der einzelnen Kabel. Auf der Oberfläche des Sockels 41 jeder der Kabelhalterungen 40 ist unterhalb von jedem bogenförmigen Halteelement 45 ein nach oben ragender, quer zur Längsrichtung der Kabelhalterung 40 verlaufender Positionierungssteg 48 angeordnet. Dieser dient zum definierten Positionieren eines Kabels und verhindert dessen seitliches Verrutschen. Des weiteren ist an der Außenseite jedes bogenförmigen Halteelements 45 im Übergangsbereich zum Sockel 41 jeweils eine Zahnung 47 angebracht, welche dazu dient, in die Isolierung eines vom jeweiligen benachbarten bogenförmigen Halteelement 45 festgeklemmten Kabels einzugreifen und dessen Verrutschen in Längsrichtung zu verhindern.

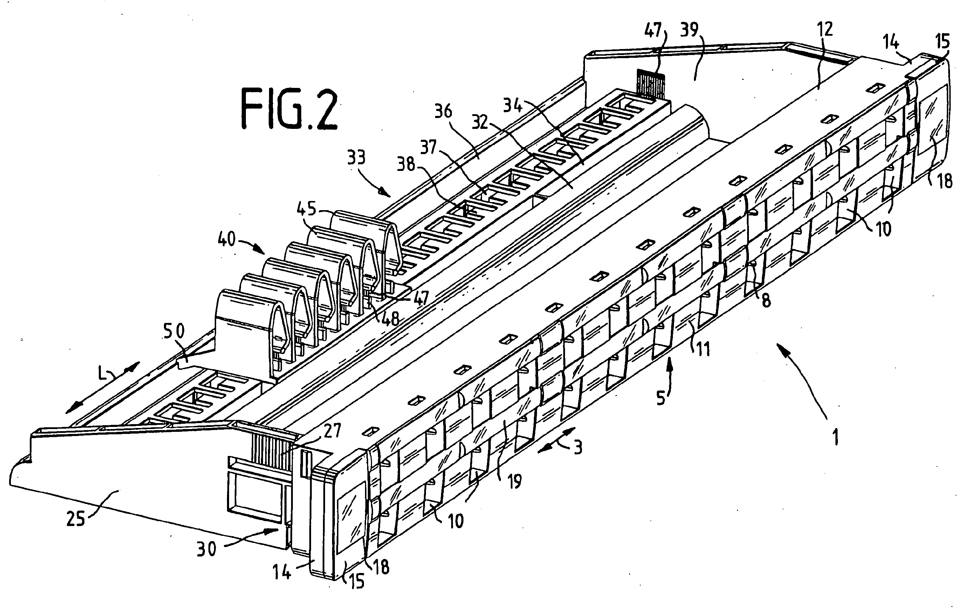

Fig. 2 zeigt frontal von schräg oben gesehen eine perspektivische Ansicht einer Variante der gleichen Ausführungsform einer erfindungsgemäßen Montagevorrichtung für Leitungs- und Steckverbindungselemente der Telekommunikations- und Datentechnik. Dabei ist ebenfalls ein Patch-Panel 1 dargestellt, allerdings ist bei diesem im Gegensatz zu der in Fig. 1 gezeigten Montagevorrichtung an dem U-förmigen Kabelabfangelement 25 anstatt vier lediglich eine Kabelhalterung 40 angebracht. Dadurch ist zu erkennen, dass in einem länglichen Querabschnitt 33 des Kabelabfangelements 25, an welchem Kabelhalterungen 40 anbringbar sind, in Längsrichtung L jeweils ein schmaler Rastkanal 34 sowie ein parallel dazu verlaufender breiter Rastkanal 36 vorgesehen ist, in welche die Kabelhalterung 40 eingreifen kann. Die Kabelhalterung 40 liegt dabei in ihrem eingerasteten Zustand unter anderem an einer den schmalen Rastkanal 34 begrenzenden Rastschiene 32 an und stützt sich an dieser ab. Zudem befinden sich in dem länglichen Querabschnitt 33 des Kabelabfangelements 25 zwischen dem schmalen Rastkanal 34 und dem breiten Rastkanal 36 eine Mehrzahl nebeneinander angeordneter Aussparungen 37, in welche Befestigungslaschen 38 hineinragen. Bevorzugt entspricht die Anzahl der Aussparungen 37 bzw. der Befestigungslaschen 38 der Anzahl der im Frontpanel 5 angeordneten Aufnahmen 10, d.h. im vorliegenden Beispiel vierundzwanzig Stück. Die Befestigungslaschen 38 dienen dazu, Kabel beispielsweise mit Hilfe von Kabelbindern (nicht dargestellt) zu befestigen, insbesondere für diejenigen Fälle, in denen der Kabeldurchmesser nicht der Dimensionierung der Kabelhalterung 40 entspricht, sondern zu dick oder zu dünn für diese ist, um das Kabel zufrieden stellend zu positionieren bzw. festzuklemmen. In diesem Fall kann die Kabelhalterung 40 entfernt werden und das betreffende Kabel kann stattdessen mit Hilfe eines Kabelbinders am Kabelabfangelement 25 befestigt werden. Des Weiteren ist zu erkennen, dass an einer der beiden an dem länglichen Querabschnitt 33 angrenzenden Innenflächen 39 des Kabelabfangelements 25 ebenfalls eine Zahnung 47 vorgesehen ist, um auch einem Kabel, welches zwischen dem äußersten bogenförmigen Halteelement 45 einer an die Innenfläche 39 angrenzenden Kabelhalterung 40 und der Innenfläche 39 angebracht ist (nicht dargestellt), ausreichenden Halt in Längsrichtung zu verleihen.

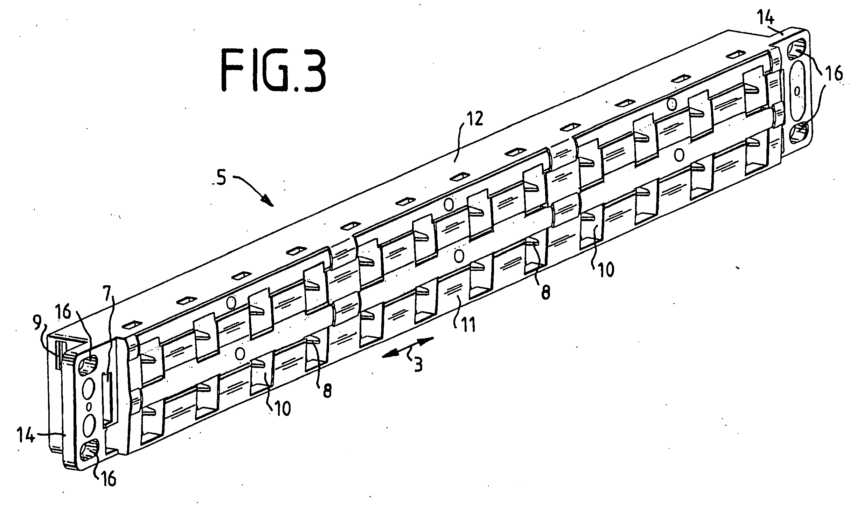

Fig. 3 zeigt frontal von schräg oben gesehen eine perspektivische Ansicht des einzeln dargestellten Frontpanels 5. Da die in Fig. 1 und 2 dargestellten seitlichen Abdeckelemente 15, die zugehörigen Labelabdeckungen 18 sowie die elastischen Labelabdeckungen 19 hier weggelassen sind, ist zu erkennen, dass die seitlichen Tragelemente 14 jeweils zwei Bohrungen 16 aufweisen, mittels derer das Frontpanel 5 bzw. das Patch-Panel 1 (s. Fig. 1 und 2) an einem Schaltschrank oder Rack (nicht dargestellt) befestigt werden kann. Die Bohrungen 16 sind dabei vorzugsweise als quer verlaufende Langlochbohrungen ausgeführt, um ein gewisses Spiel zur seitlichen Positionskorrektur während der Montage im Rack zu ermöglichen. Zudem ist in den seitlichen Tragelementen 14 jeweils ein senkrechte verlaufender Aufnahmeschlitz 7 zur Aufnahme von Rastlaschen (nicht dargestellt) der aufrastbaren seitlichen Abdeckelemente 15 (s. Fig. 1 und 2) vorgesehen.

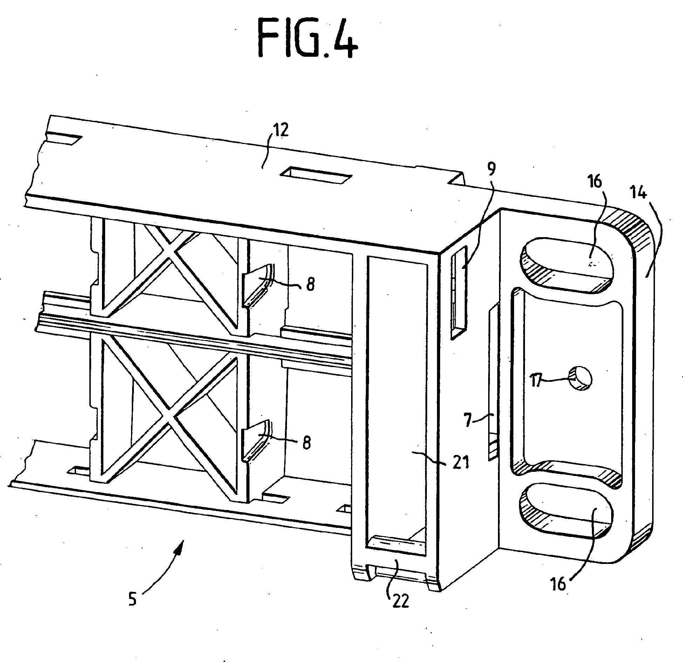

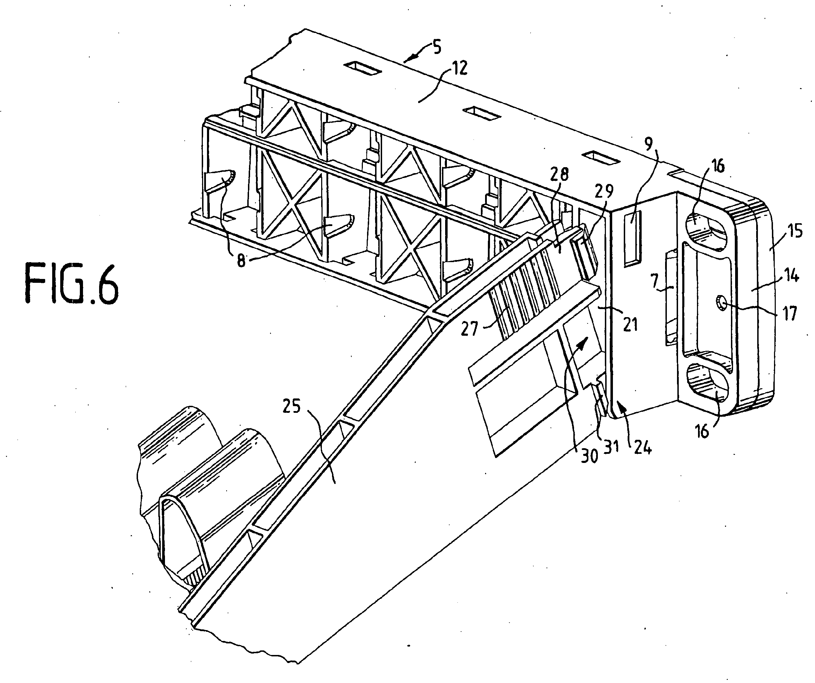

Fig. 4 zeigt eine perspektivische Detailansicht eines seitlichen Abschnitts der Rückseite des Frontpanels 5 von schräg unten gesehen. Dabei ist insbesondere zu erkennen, dass der an das seitliche Tragelement 14 angrenzende Bereich des Frontpanels 5 zur Bildung der Schnappverbindung 20 (siehe Fig. 1) einen Hohlraum bildet und als Schnappverbindungsaufnahme 21 ausgebildet ist. Zudem ist das untere Ende der Schnappverbindungsaufnahme 21 als Schamierzapfen 22 zur Bildung eines Scharniers 24 (siehe Fig. 6) ausgebildet. Der Schamierzapfen 22 ist dabei vorzugsweise als quer verlaufende gegenüber der Bodenfläche der Schnappverbindungsaufnahme 21 erhöhte Profilstufe ausgebildet. Es ist jedoch auch vorstellbar, dass der Schamierzapfen 22 beispielsweise aus einer quer verlaufenden zylinderförmigen oder halbzylinderförmigen Strebe ausgebildet ist. Des Weiteren ist zu erkennen, dass in dem seitlichen Tragelement 14 eine Zentrierbohrung 17 vorgesehen ist, die zur exakten Positionierung des seitlichen Abdeckelements 15 (siehe Fig. 1 und 2) mittels eines an diesem angebrachten Zentrierstifts (nicht dargestellt), der in die Zentrierbohrung 17 eingreifen kann, dient.

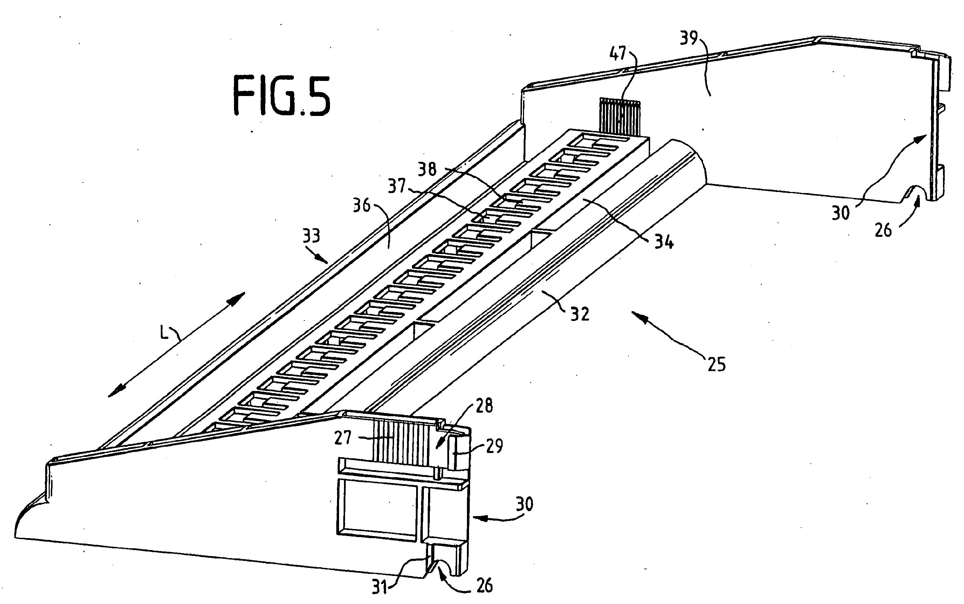

Fig. 5 zeigt eine perspektivische Ansicht des Kabelabfangelements 25 von schräg oben gesehen. Dabei ist insbesondere zu erkennen, dass die Enden der seitlichen Schenkel des U-förmigen Kabelabfangelements 25 als Schnappverbindungssteckelemente 30 ausgebildet sind. Diese weisen an ihrem oberen Ende jeweils eine Schnapplasche 28 auf, die elastisch federnd in Längsrichtung L des Kabelabfangelements 25 verbiegbar ist und an welcher außen seitlich die Riffelung 27 angebracht ist. Der Raststeg 29 bildet das vordere Ende der Schnapplasche 28 und ist zur Erleichterung des Einrastens keilförmig angeschrägt. Am unteren Ende des Schnappverbindungssteckelements 30 ist zur Bildung des Scharniers 24 eine Schamierpfanne 26 vorgesehen. Diese ist vorzugsweise als halbzylinderförmige Ausbuchtung ausgebildet. Benachbart zur Schamierpfanne 26 ist ein als Profilsteg ausgebildeter Anschlag 31 vorgesehen.

Fig. 6 zeigt eine perspektivische Detailansicht des Einrastvorgangs zwischen dem Frontpanel 5 und dem Kabelabfangelement 25 von schräg unten gesehen. Für die Bildung der Schnappverbindung 20 (siehe Fig. 1) greifen das Kabelabfangelement 25 und das Frontpanel 5 bereichsweise ineinander, wobei im Bereich des gegenseitigen Eingriffs das Scharnier 24 vorgesehen ist, mit dessen Hilfe das Kabelabfangelement 25 gegenüber dem Frontpanel 5 verschwenkbar ist. Zur Durchführung des Einrastvorgangs wird zunächst die Scharnierpfanne 26 (siehe Fig. 5) in den Schamierzapfen 22 (s. Fig. 4) eingehängt und dann das Kabelabfangelement 25 um das Scharnier 24 gegenüber dem Frontpanel 5 nach oben verschwenkt. Dadurch wird das Schnappverbindungssteckelement 30 vollständig in die Schnappverbindungsaufnahme 21 eingeführt, bis der Anschlag 31 an der Rückseite des Frontpanels 5 anliegt und der keilförmige Raststeg 29 am äußeren Ende der Schnapplasche 28 in den Rastschlitz 9 eingerastet ist. Somit können zunächst die zu montierenden Anschlussbuchsen beschaltet und danach im Frontpanel 5 eingesetzt werden, bevor dann das Kabelabfangelement 25 mittels des Scharniers 24 von unten in das Frontpanel 5 eingehängt, hochgeklappt, eingerastet und somit insgesamt in äußerst einfacher Weise montiert werden kann. Zum Lösen der Schnappverbindung 20 wird das Schnappverbindungssteckelement 30 im Bereich der Riffelung 27 zusammen gedrückt, so dass die elastisch federnde Schnapplasche 28 nach innen gebogen und der Raststeg 29 aus dem Eingriff mit dem Rastschlitz 9 gelöst wird. Sodann kann das gesamte Kabelabfangelement 25 um das Scharnier 24 gegenüber dem Frontpanel 5 nach unten verschwenkt und das Schnappverbindungssteckelement 30 aus dem Eingriff mit der Schnappverbindungsaufnahme 21 entnommen werden.

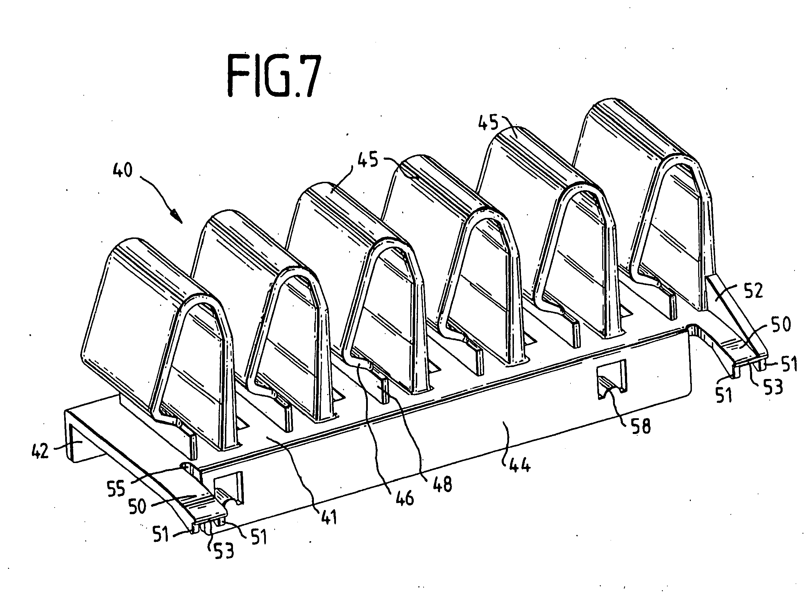

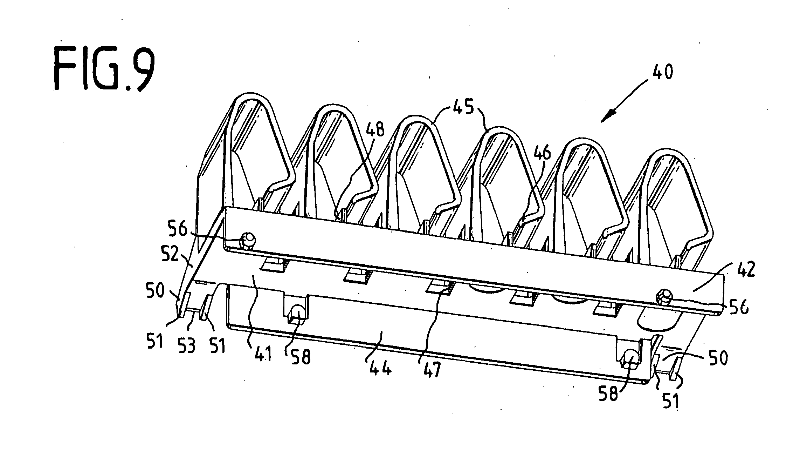

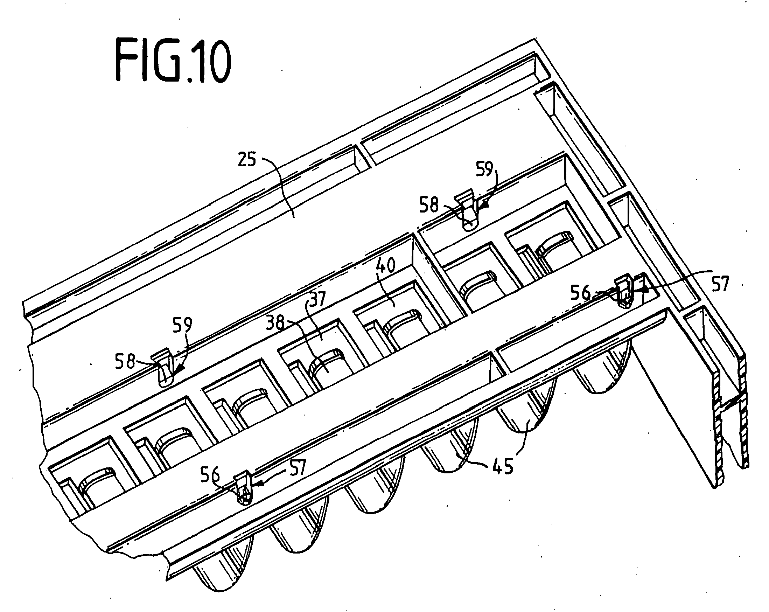

Fig. 7 zeigt eine perspektivische Ansicht der Kabelhalterung 40 frontal von schräg oben gesehen. Dabei ist zu erkennen, dass die Kabelhalterung 40 ausgehend von ihrem Sockel 41 an ihren Längsseiten jeweils einen nach unten ragenden schmalen Sockelrand 42 sowie breiten Sockelrand 44 aufweist, welche zur Positionierung der Kabelhalterung 40 am Kabelabfangelement 25 dienen. Hierzu greift der schmale Sockelrand 42 in den schmalen Rastkanal 34 ein und stützt sich an der Rastschiene 32 ab, während der breite Sockelrand 44 in den breiten Rastkanal 36 eingreift (siehe Fig. 2). Des Weiteren weist die Kabelhalterung 40 an beiden Enden derjenigen Längsseite, an der der breite Sockelrand 44 angebracht ist, jeweils einen quer aus der Kabelhalterung 40 herausragenden Schnapphaken 50 auf. Dieser weist jeweils zwei keilförmige nach unten ragende Raststege 51 sowie einen quer verlaufenden Profilsteg 53 auf, mit dessen Hilfe der Schnapphaken 50 die Kabelhalterung 40 an der der Kabelhalterung 40 gegenüberliegenden Kante des breiten Rastkanals 36 abstützt. Zur Stabilisierung der Abstützung der Kabelhalterung 40 ist an einem der beiden Schnapphaken 50 ein Stabilisierungssteg 52 vorgesehen. Außerdem sind zur Fixierung der Kabelhalterung 40 am Kabelabfangelement 25 im breiten Sockelrand 44 vorzugsweise zwei nach innen ragende Haltetürme 58 vorgesehen, die in damit korrespondierenden Öffnungen 59 (siehe Fig. 10) im breiten Rastkanal 36 des Kabelabfangelements 25 eingreifen können. Vorzugsweise sind die Haltetürme 58 als halbzylinderförmige Nocken ausgebildet. Am schmalen Sockelrand 42 sind zum gleichen Zweck jeweils vorzugsweise zwei nach außen ragende Haltestifte 56 (siehe Fig. 9) vorgesehen, die in damit korrespondierenden Öffnungen 57 (siehe Fig. 10) im schmalen Rastkanal 34 des Kabelabfangelements 25 eingreifen können. Zum Lösen der Kabelhalterung 40 aus dem Eingriff mit dem Kabelabfangelement 25 wird der Schnapphaken 50 aus der Stützposition am breiten Rastkanal 36 leicht nach oben gebogen, so dass die Kabelhalterung 40 quer zum schmalen und breiten Rastkanal 34, 36 verschoben, die Haltetürme 58 aus dem Eingriff mit den Öffnungen 59 geschoben, die Haltestifte 56 aus dem Eingriff mit dem Öffnungen 57 geschoben und die Kabelhalterung 40 aus dem Eingriff mit dem Kabelabfangelement 25 entnommen werden kann. Zur Erleichterung des flexiblen Biegens des Schnapphakens 50 ist am Übergang zwischen dem Schnapphaken 50 und dem Sockel 41 jeweils eine Aussparung 55 vorgesehen.

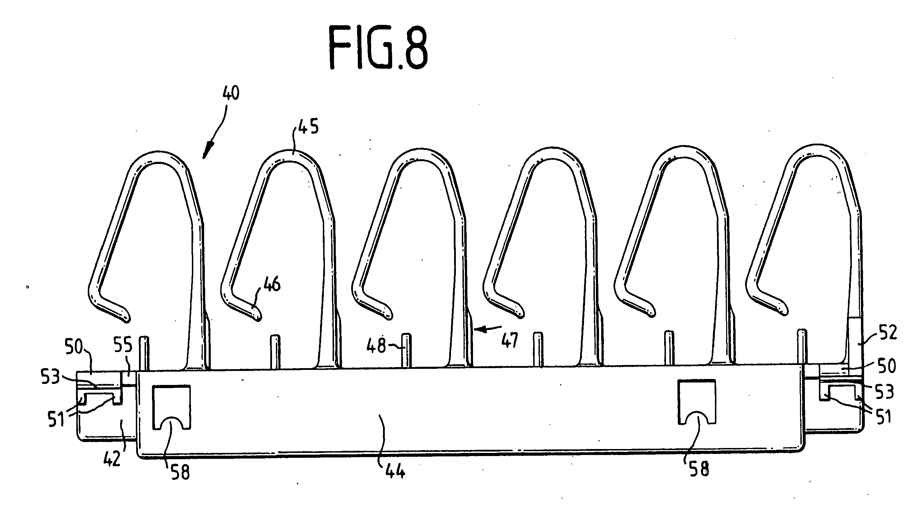

Fig. 8 zeigt die gleiche Kabelhalterung 40 in der Vorderansicht, während Fig. 9 eine perspektivische Ansicht der Kabelhalterung 40 frontal von schräg unten gesehen zeigt. Fig. 10 zeigt demgegenüber die Kabelhalterung 40 in einer perspektivischen Detailansicht von schräg unten gesehen in der im Kabelabfangelement 25 eingerasteten Position. Dabei ist insbesondere zu erkennen, wie die Haltestifte 56 sowie die Haltetürme 58 in die jeweiligen mit ihnen korrespondierenden Öffnungen 57, 59 im schmalen und breiten Rastkanal 34, 36 eingreifen.

### Bezugszeichenliste

- 1: Patch-Panel
- 3: Abstand
- 5: Frontpanel
- 7: Aufnahmeschlitz
- 8: Verankerungsnut
- 9: Rastschlitz
- 10: Aufnahme
- 11: Blende
- 12: Tragstruktur
- 14: seitliches Tragelement
- 15: seitliches Abdeckelement
- 16: Bohrung
- 17: Zentrierbohrung
- 18: Labelabdeckung
- 19: elastische Labelabdeckung
- 20: Schnappverbindung
- 21: Schnappverbindungsaufnahme
- 22: Schamierzapfen
- 24: Scharnier
- 25: Kabelabfangelement
- 26: Scharnierpfanne
- 27: Riffelung
- 28: Schnapplasche
- 29: Raststeg
- 30: Schnappverbindungssteckelement
- 31: Anschlag
- 32: Rastschiene
- 33: länglicher Querabschnitt
- 34: schmaler Rastkanal
- 36: breiter Rastkanal
- 37: Aussparung
- 38: Befestigungslaschen
- 39: Innenfläche
- 40: Kabelhalterung
- 41: Sockel
- 42: schmaler Sockelrand
- 44: breiter Sockelrand
- 45: bogenförmiges Halteelement
- 46: hakenförmiges Ende
- 47: Zahnung
- 48: Positionierungssteg
- 50: Schnapphaken
- 51: Raststeg
- 52: Stabilisierungssteg
- 53: Profilsteg
- 55: Aussparung
- 56: Haltestift
- 57: Öffnung
- 58: Halteturm
- 59: Öffnung
- B: Breite der Aufnahme
- V: vertikaler Abstand zwischen den Aufnahmen
- L: Längsrichtung des Kabelabfangelements

## Patentansprüche

1. Montagevorrichtung für elektrische Leitungs- und Steckverbindungselemente der Telekommunikations- und Datentechnik, umfassend mindestens ein Frontpanel (5), welches eine Tragstruktur (12) mit seitlichen Tragelementen (14) sowie mindestens eine Blende (11) mit einer Mehrzahl von Aufnahmen (10) für Anschlussbuchsen aufweist, die in mindestens zwei übereinander liegenden Reihen angeordnet sind, wobei das Frontpanel (5) vollständig aus Kunststoff ausgebildet ist, wobei die Aufnahmen (10) einer Reihe in äquidistantem Abstand (3) angeordnet sind, wobei der Abstand (3) zwischen zwei Aufnahmen (10) einer Reihe mindestens doppelt so groß ist wie der vertikale Abstand (V) zwischen zwei übereinander liegenden Reihen von Aufnahmen (10), **dadurch gekennzeichnet, dass** der Abstand (3) benachbarter Aufnahmen (10) für Anschlussbuchsen einer Reihe jeweils mindestens so groß ist wie die Breite (B) einer einzelnen Aufnahme (10), wobei diese mindestens ein Kabelabfangelement (25) aus Kunststoff zum Abstützen und/oder Befestigen von mindestens einem Kabel aufweist, wobei das Kabelabfangelement (25) rückseitig am Frontpanel (5) angebracht ist und am Kabelabfangelement (25) mindestens eine Kabelhalterung (40) aus Kunststoff zum definierten Positionieren einer Mehrzahl von Kabeln vorgesehen ist, wobei an der Kabelhalterung (40) eine Mehrzahl von nebeneinander angeordneten, nach einer Seite geöffneten bogenförmigen Halteelementen (45) vorgesehen ist, die zum definierten Positionieren und/oder Befestigen von jeweils mindestens einem Kabel an der Kabelhalterung (40) federelastisch ausgebildet sind und auf einem Sockel (41) angeordnet sind, wobei auf der Oberfläche des Sockels (41) unterhalb von jedem bogenförmigen Halteelement (45) ein nach oben ragender, quer zur Längsrichtung der Kabelhalterung (40) verlaufender Positionierungssteg (48) angeordnet ist.

2. Montagevorrichtung nach Anspruch 1, **dadurch gekennzeichnet, dass** das Kabelabfangelement (25) mittels mindestens einer Schnappverbindung (20) am Frontpanel (5) einrastend befestigt ist.

3. Montagevorrichtung nach einem der Ansprüche 1 oder 2, **dadurch gekennzeichnet, dass** zum Anbringen des Kabelabfangelements (25) am Frontpanel (5) diese bereichsweise ineinander greifen, wobei im Bereich des gegenseitigen Eingriffs mindestens ein Scharnier (24) vorgesehen ist, mit dessen Hilfe das Kabelabfangelement (25) gegenüber dem Frontpanel (5) verschwenkbar ist.

4. Montagevorrichtung nach einem der Ansprüche 1 bis 3, **dadurch gekennzeichnet, dass** Kabelabfangelement (25) und Kabelhalterung (40) einstückig ausgebildet sind.

5. Montagevorrichtung nach einem der Ansprüche 1 bis 3, **dadurch gekennzeichnet, dass** Kabelabfangelement (25) und Kabelhalterung (40) mehrteilig ausgebildet sind.

## Claims

1. Mounting apparatus for electrical line and plug-in connecting elements for telecommunications and data technology, having at least one front panel (5), which has a supporting structure (12) with side supporting elements (14) and at least one panel (11) with a plurality of receptacles (10) for connecting sockets which are arranged in at least two rows which are located one above the other,
wherein the front panel (5) is formed completely from plastic, wherein the receptacles (10) in a row are arranged at equidistant intervals (3), wherein the distance (3) between two receptacles (10) in a row is at least twice the vertical distance (V) between two rows of receptacles (10) which are located one above the other,
**characterized in that** the distance (3) between adjacent receptacles (10) for connecting sockets in a row is in each case at least as great as the width (B) of an individual receptacle (10), wherein said mounting apparatus has at least one cable holding element (25) composed of plastic for supporting and/or attachment of at least one cable, with the cable holding element (25) being fitted to the rear face of the front panel (5) and at least one cable holder (40) composed of plastic being provided on the cable holding element (25) for defined positioning of a plurality of cables, wherein a plurality of curved holding elements (45) are provided on the cable holder (40), are arranged alongside one another, are open on one side and are designed to be resiliently elastic for defined positioning and/or attachment of in each case at least one cable to the cable holder (40) and are arranged on a cap (41), wherein a positioning web (48), which projects upwards and runs transversely with respect to the longitudinal direction of the cable holder (40), is arranged on the surface of the cap (41), underneath each curved holding element (45).

2. Mounting apparatus according to Claim 1, **characterized in that** the cable holding element (25) is attached to the front panel (5) by being latched in by means of at least one snap-action connection (20).

3. Mounting apparatus according to one of Claims 1 or 2, **characterized in that**, in order to fit the cable holding element (25) to the front panel (5), these engage in one another in places, with at least one hinge (24) being provided in the area of the mutual engagement, with whose aid the cable holding element (25) can be pivoted with respect to the front panel (5).

4. Mounting apparatus according to one of Claims 1 to 3, **characterized in that** the cable holding element (25) and the cable holder (40) are formed integrally.

5. Mounting apparatus according to one of Claims 1 to 3, **characterized in that** the cable holding element (25) and the cable holder (40) are formed from two or more parts.

## Revendications

1. Dispositif de montage pour éléments de liaison et de connexion électriques en télécommunication et en informatique, comprenant au moins un panneau avant (5) qui présente une structure porteuse (12) munie d'éléments porteurs (14) latéraux ainsi qu'au moins un cache (11) muni d'une pluralité de logements (10) pour des douilles de raccordement, lesquels sont disposés en au moins deux rangées se trouvant l'une au-dessus de l'autre, le panneau avant (5) étant entièrement réalisé en matière plastique,
les logements (10) d'une rangée étant disposés à un écart (3) équidistant,
l'écart (3) entre deux logements (10) d'une rangée étant au moins égal au double de l'écart vertical (V) entre deux rangées de logements (10) qui se trouvent l'une au-dessus de l'autre,
**caractérisé en ce que**
l'écart (3) entre les logements (10) voisins pour les douilles de raccordement d'une rangée est au moins aussi grand que le largeur (B) d'un logement (10) individuel,
celui-ci présentant au moins un élément serre-câble (25) en matière plastique pour soutenir et/ou fixer au moins un câble, l'élément serre-câble (25) étant monté du côté arrière sur le panneau avant (5) et au moins une attache-câble (40) en matière plastique étant prévue sur l'élément serre-câble (25) pour le positionnement défini d'une pluralité de câbles, une pluralité d'éléments de maintien (45) de forme voutée ouverts d'un côté et disposés les uns à côté des autres étant prévus sur l'attache-câble (40), lesquels sont réalisés déformables par effet élastique en vue d'un positionnement défini et/ou de la fixation à chaque fois d'au moins un câble à l'attache-câble (40) et sont disposés sur un socle (41), une nervure de positionnement (48) qui fait saillie vers le haut et qui s'étend transversalement par rapport au sens longitudinal de l'attache-câble (40) étant disposée sur la surface du socle (41) au-dessous de chaque élément d'attache (45) de forme voutée.

2. Dispositif de montage selon la revendication 1, **caractérisé en ce que** l'élément serre-câble (25) est fixé par enclenchement au panneau avant (5) au moyen d'au moins une liaison par enclipsage (20).

3. Dispositif de montage selon l'une des revendications 1 ou 2, **caractérisé en ce que** pour monter l'élément serre-câble (25) sur le panneau avant (5), ceux-ci viennent en prise l'un dans l'autre dans certaines zones, au moins une charnière (24) étant prévue dans la zone de la prise mutuelle, à l'aide de laquelle l'élément serre-câble (25) peut pivoter par rapport au panneau avant (5).

4. Dispositif de montage selon l'une des revendications 1 à 3, **caractérisé en ce que** l'élément serre-câble (25) et l'attache-câble (40) sont réalisés d'une seule pièce.

5. Dispositif de montage selon l'une des revendications 1 à 3, **caractérisé en ce que** l'élément serre-câble (25) et l'attache-câble (40) sont réalisés en plusieurs parties.
